**Europäisches Patentamt**

**European Patent Office**

**Office européen des brevets**

(19)

(11) Veröffentlichungsnummer : **0 351 509 B1**

(12) # EUROPÄISCHE PATENTSCHRIFT

(45) Veröffentlichungstag der Patentschrift :
**24.06.92 Patentblatt 92/26**

(51) Int. Cl.⁵ : **G01B 21/04,** G01B 5/00,
G01D 5/26

(21) Anmeldenummer : **89108308.1**

(22) Anmeldetag : **09.05.89**

(54) **Gekapselte Positionsmesseinrichtung.**

(30) Priorität : **21.07.88 DE 3824751**

(43) Veröffentlichungstag der Anmeldung :
**24.01.90 Patentblatt 90/04**

(45) Bekanntmachung des Hinweises auf die
Patenterteilung :
**24.06.92 Patentblatt 92/26**

(84) Benannte Vertragsstaaten :
**DE**

(56) Entgegenhaltungen :
EP-A- 0 120 205
EP-A- 0 188 189
EP-A- 0 257 210
DE-A- 3 509 390
DE-U- 8 616 206

(73) Patentinhaber : **Dr. Johannes Heidenhain
GmbH
Dr.-Johannes-Heidenhain-Strasse 5 Postfach
1260
W-8225 Traunreut (DE)**

(72) Erfinder : **Schmitt, Walter, Ing.grad.
Hochgernstrasse 22
W-8225 Traunreut (DE)**

EP 0 351 509 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

EP 0 351 509 B1

## Beschreibung

Mit Positionsmeßeinrichtungen werden die Verlagerungen von Maschinen-Bauteilen gemessen. Bei Werkzeugmaschinen sind dies das Maschinenbett und der Maschinenschlitten. Aus der Literatur und aus der Praxis sind derartige Positionsmeßeinrichtungen hinlänglich bekannt. Sie arbeiten nach den unterschiedlichsten physikalischen Prinzipien. In feuchter Umgebung, beispielsweise in Bearbeitungszentren ist die Funktion derartiger Positionsmeßeinrichtungen gefährdet, da sich Spritzwasser und/oder Kondensat auf den Bauteilen niederschlägt.

In der Praxis haben sich gekapselte Positionsmeßeinrichtungen bewährt, bei denen ein Längsschlitz im Gehäuse vorgesehen ist, durch den ein Mitnehmer hindurch greift, der die Maschinenbewegungen auf die Meßeinrichtung überträgt. Dieser Längsschlitz ist mit Hilfe von elastischen Dichtlippen abgedichtet (siehe beispielsweise die EP-A-0 120 205).

Durch feinste Lecks kann jedoch auch bei den bekannten Positionsmeßeinrichtungen Feuchtigkeit in den Innenraum derartiger Geräte eindringen und die Funktion gefährden.

Der Erfindung liegt die Aufgabe zugrunde, eine Positionsmeßeinrichtung zu schaffen, in deren Innenraum keine schädlichen Medien eindringen können, so daß Betriebssicherheit und Meßenauigkeit auch in ungünstiger Umgebung gewährleistet ist.

Diese Aufgabe wird von einer Positionsmeßeinrichtung mit den Merkmalen des Anspruches 1 gelöst.

In den abhängigenansprüchen sind besonders vorteilhafte Ausgestaltungsmöglichkeiten angegeben.

Die Vorteile der erfindungsgemäßen Positionsmeßeinrichtung liegen in der hermetischen Kapselung der gefährdeten Bauteile.

Mit Hilfe von Ausführungsbeispielen wird die Erfindung anhand der Zeichnungen noch näher erläutert. Es zeigt

Figur 1 eine hermetisch gekapselte Längenmeßeinrichtung,

Figur 2 eine Schemaskizze der Längenmeßeinrichtung gemäß Figur 1,

Figur 3 eine Variante der Schemaskizze gemäß Figur 2,

Figur 4 einen Abschnitt einer Längenmeßeinrichtung mit internem Sensor,

Figur 5 eine schematische Querschnittsansicht der Längenmeßeinrichtung gemäß Figur 4 und

Figur 6 eine Variante der Längenmeßeinrichtung nach Figur 5 mit externem Sensor.

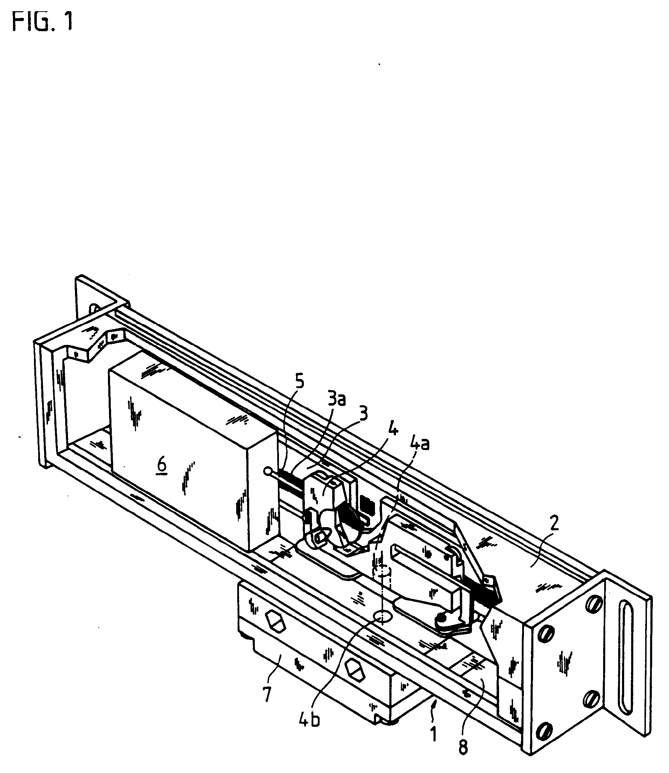

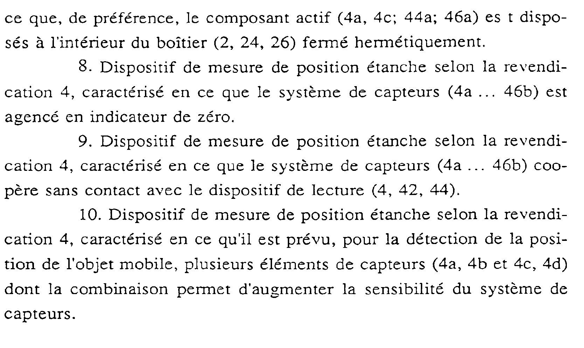

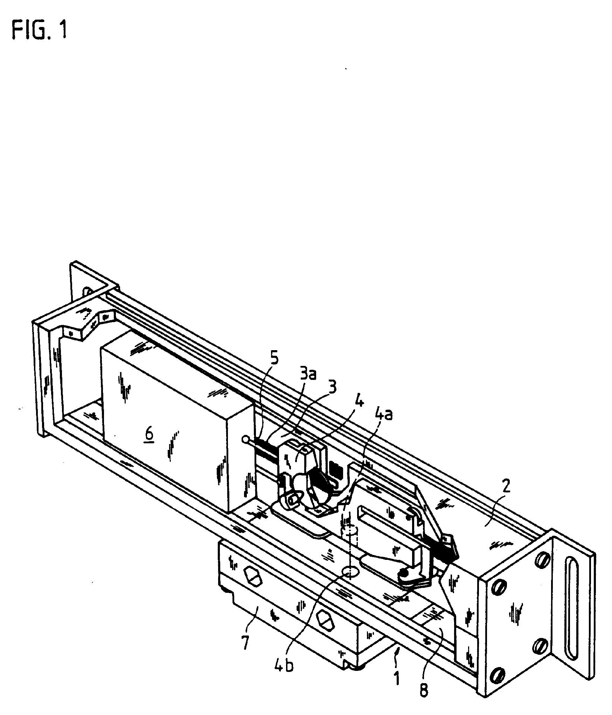

Eine in Figur 1 dargestellte Längenmeßeinrichtung weist ein allseitig geschlossenes Gehäuse 2 auf. Ein Meßnormal, das hier durch einen Meßteilungs-Trägerkörper 3 realisiert ist, befindet sich im Innern des Gehäuses 2. Durch geeignete Führungen ist am Meßteilungs-Trägerkörper 3 und/oder am Gehäuse 2 eine Ableseeinrichtung 4 für eine Meßteilung 3a geführt. Die Ableseeinrichtung 4 ist über ein Koppelelement 5 mit einer Nachführeinrichtung 6 verbunden. Die Verbindung der Ableseeinrichtung 4 mit der Nachführeinrichtung 6 ist durch das Koppelelement 5 in Meßrichtung steif und quer zur Meßrichtung in Grenzen beweglich.

Das Gehäuse 2 wird an einem der Maschinen-Bauteile, deren Relativlage gemessen werden soll, befestigt. Am anderen Maschinen-Bauteil wird ein Montageelement 7 befestigt.

Die Ableseeinrichtung 4 verfügt über ein Sensorsystem 4a, 4b, von denen die aktive Komponente 4a an der Ableseeinrichtung 4, also im Innern des Gehäuses 2 und die passive Komponente 4b am Montageelement 7 angeordnet sind.

Die Verlagerungen des Montageelementes 7 aufgrund von Maschinenbewegungen werden vom Sensorsystem 4a, 4b erfaßt und an die Nachführeinrichtung 6 übertragen. Dort werden sie in Steuerdaten zur Nachführung der Ableseeinrichtung 4 umgewandelt, mit deren Hilfe die Ableseeinrichtung 4 den Bewegungen des Montageelementes 7 - und damit den Maschinenbewegungen - nachgeführt wird.

Aus Figur 2 wird anhand der Schemaskizze der Aufbau deutlich. Das Gehäuse 2 ist in beliebiger Weise an einem nicht näher bezeichneten Maschinen-Bauteile befestigt. Das Gehäuse 2 umgibt den bereits anhand der Figur 1 beschriebenen Meßteilungs-Trägerkörper 3, der eine Meßteilung 3a aufweist. Eine Ableseeinrichtung 4 tastet in bekannter Weise die Meßteilung 3a ab und übergibt die Abtastsignale in beliebiger Weise an eine Auswerteeinrichtung. Da die Art und Weise der Signalübertragung im Ermessen des Fachmannes liegt, soll offen bleiben, ob die Übertragung per abgedichteter Leitungen oder drahtlos erfolgt; ob im letzteren Fall induktiv oder per Infrarotübertragung ist nach den Einsatzbedingungen festzulegen. Gleiches gilt für die Energieversorgung.

Mit der Ableseeinrichtung 4 ist über ein Koppelelement 5 die Nachführeinrichtung 6 in Meßrichtung starr verbunden.

Die aktive Komponente 4a des Sensorsystemes 4a, 4b befindet sich in der Ableseeinrichtung 4 und die passive Komponente 4b befindet sich im Montageelement 7. Wie auch aus Figur 1 ersichtlich ist, besteht die dem Montageelement 7 zugewandte Längsseite des Gehäuses 2 zumindest teilweise aus durchsichtigem Material, vorzugsweise wird dort eine Glaslamelle 8 eingekittet. Die Komponenten des Sensorsystems 4a, 4b kön-

2

nen durch die Glaslamelle 8 hindurch zusammenwirken, um die Lage des Montageelementes 7 zu erfassen und der Nachführeinrichtung 6 die entsprechenden Informationen zuleiten. Die Nachführeinrichtung 6 bildet daraus Steuerdaten zur Nachführung der Ableseeinrichtung 4 und bewegt diese soweit, bis das Sensorsystem 4a, 4b wieder Übereinstimmung mit der Lage des Montageelementes 7 meldet. In der Nachführeinrichtung 6 kann für die Bewegung der Ableseeinrichtung 4 ein Motor 6a vorgesehen sein, der mittels Reibradantrieb 6b die gekoppelte Einheit aus Nachführeinrichtung 6 und Ableseeinrichtung 4 bewegt.

Feinfühliger und schneller kann die Ableseeinrichtung 4 nachgeführt werden, wenn ein Antrieb aus zwei Komponenten verwendet wird - ein Motor 6a für den Reibradantrieb 6b und ein schnellwirkender piezoelektrischer Antrieb 6c für die Erhöhung der Reaktionsfähigkeit bei der Bewegung der Ableseeinrichtung 4.

Das Sensorsystem 4a, 4b wird bevorzugt als sogenannter Nullindikator ausgebildet, der an sich bekannt ist.

Bei der in Figur 3 dargestellten Variante sind alle Elemente bis auf das Sensorsystem gleichartig mit den bisher beschriebenen, weshalb eine Wiederholung des Vorstehenden nicht zweckdienlich erscheint. Jeweils in der Nähe der Enden der Ableseeinrichtung 42 ist ein Sensorsystem 42a, 42b und 42c, 42d vorgesehen. Durch die mehrfachen Sensoren, die dementsprechend auch am Montageelement 72 weit auseinander liegen, wird die Empfindlichkeit des Sensorsystems 42a, 42b; 42c, 42d deutlich gesteigert.

Verschaltet man die beiden Einheiten 42a, 42b und 42c, 42d des Sensorsystemes in geeigneter Weise miteinander, so wird die resultierende Kennlinie doppelt so steil wie bei einem Sensorsystem mit nur einer Einheit. Zusammen mit dem bereits erwähnten schnellwirkenden Piezoantrieb erhält man ausgezeichnete Nachführeigenschaften. Anstelle des Motors und des Piezoantriebes sind auch andere Antriebe mit entsprechenden Eigenschaften geeignet.

Mehrere Sensor-Komponenten lassen sich auch für größere Toleranzen bei Verkippungen und Verdrehungen vorteilhaft einsetzen.

In Figur 4 ist eine Längenmeßeinrichtung 14 gezeigt, deren Gehäuse 24 seitlich aufgebrochen und an der Stirnseite offen dargestellt ist. Gemäß der Erfindung ist aber auch dieses Gehäuse 24 hermetisch verschlossen. Auf der Stirnseite befindet sich selbstverständlich ein Verschlußdeckel. Das Gehäuse 24 weist - wie bei herkömmlichen Längenmeßeinrichtungen - einen Längsschlitz 24a auf, der mit V-förmigen Dichtlippen 74 und 84 abgedichtet ist.

Im Innern des Gehäuses 24 befindet sich eine an geeigneten Führungen geführte Ableseeinrichtung 44, die ein als Meßteilungs-Trägerkörper 34 ausgebildetes Meßnormal abtastet. In die Ableseeinrichtung 44 ist eine aktive Sensor-Komponente 44a eines Sensorsystemes integriert, die mit einer zweiten Sensor-Komponente 44b zusammen wirkt, welche an einem Montageelement 64 befestigt ist. Die aktive Sensor-Komponente 44a ist ferner Bestandteil einer Nachführeinrichtung 54, die mit der Ableseeinrichtung 44 eine Einheit bildet. Die Einheit, bestehend aus Ableseeinrichtung 44, Sensor-Komponente 44a und Nachführeinrichtung 54, weist nicht näher dargestellte Verstellantriebe auf (analog zu den bereits beschriebenen Ausführungsbeispielen), die dazu dienen, die Ableseeinrichtung 44 exakt dem Montageelement 64 und damit dem beweglichen Maschinen-Bauteil nachzustellen.

Da die hermetische Kapselung des Gehäuses 24 in der isometrischen Darstellung gemäß Figur 4 nur schwer ersichtlich ist, wird das Kapselungs-Prinzip in Figur 5 anhand eines schematischen Querschnittes durch die Längenmeßeinrichtung 14 erläutert.

Die sehr vereinfachte Darstellung in Figur 5 zeigt das Gehäuse 24 im Teilquerschnitt. Der Längsschlitz 24a im Gehäuse 24 ist mit V-förmig angeordneten Dichtlippen 74, 84 weitgehend gegen das Eindringen von Spänen und Spritzwasser geschützt. Das Montageelement 64 durchgreift die Dichtlippen 74 und 84 und ragt mit einem nicht näher bezeichneten Schaft, der die passive Sensor-Komponente 44b trägt, in die Einheit hinein, die aus Ableseeinrichtung 44 aktiver Sensor-Komponente 44a und Nachführeinrichtung 54 besteht. Zur hermetischen Abdichtung befindet sich oberhalb und entlang des Längsschlitzes 24a eine tunnelartige Abdeckung T, die aus einer für Sensorsignale durchlässigen Folie bestehen kann. Innerhalb der Tunnelfolie T befindet sich der Schaft des Montageelementes 64 mit der passiven Sensor-Komponente 44b. Die Tunnelfolie T wird außen von der Einheit bestehend aus Ableseeinrichtung 44, aktiver Sensor-Komponente 44b und Nachführeinrichtung 54 umgriffen.

Bei Verlagerungen des Montageelementes 64 wird die vorgenannte Einheit berührungslos nachgeführt. Die Tunnelfolie T schirmt den Innenraum des Gehäuses 24 hermetisch von den schädlichen Einflüssen der Umgebung ab.

In Figur 6 ist die mechanische Umkehrung gezeigt. Eine Tunnelfolie T6 ragt in eine Aussparung in einem Montageelement 66 ein, welches eine passive Sensor-Komponente 46b enthält. Ein nicht näher bezeichneter Schaft einer Einheit wie sie zuvor beschrieben ist, ragt innerhalb der Tunnelfolie T6 über den Querschnitt des Gehäuses 26 hinaus. Er trägt die aktive Sensor-Komponente 46a. Auch für diese Ausführungsform können Dichtlippen 76, 86 den Schutz verbessern.

Im Übrigen gilt für die sensorgesteuerte Nachführung das vorstehend Gesagte. Selbstverständlich muß die hermetische Abschirmung nicht durch eine Tunnelfolie erfolgen, es können auch mehr oder weniger flexible Abdichtungselemente verwendet werden.

Das Gehäuse kann an den Stirnseiten im Bereich der Tunnelöffnungen auch offen sein, so daß Schmutz und Flüssigkeit zwar in den Tunnel gelangen, von dort aber auch wieder ablaufen können. Bei einer derartigen Bauweise bleibt das Gehäuse hermetisch verschlossen, aber der Tunnelraum kann nicht überfüllt werden.

Aus den beschriebenen Beispielen ist ersichtlich, daß die mechanische Lösung der hermetischen Abschirmung im Rahmen der Erfindung weitestgehend durch den ausführenden Fachmann anhand der vorgegebenen äußeren Bedingungen gestaltet werden kann.

Ohne die Lehre der Erfindung zu verlassen ist, auch eine Meßeinrichtung ohne körperliches Meßnormal möglich. Beispielsweise kann in einem derartig hermetisch abgeschirmten Gehäuse ein Reflektorspiegel eines Interferometers in erfindungsgemäßer Weise nachgeführt werden.

## Patentansprüche

1. Gekapselte Positionsmeßeinrichtung zur Messung der Relativlage zweier Objekte, mit einem an einem der Objekte zu befestigen dem Gehäuse zur Aufnahme eines Meßnormals und einer Ableseeinrichtung für das Meßnormal, dadurch gekennzeichnet, daß das Gehäuse (2; 24; 26) hermetisch verschlossen ist und die Ableseeinrichtung (4; 42; 44) dem anderen beweglichen Objekt mittels eines Sensorsystems (4a, 4b; 42a/42b, 42c, 42d; 44a, 44b; 46a, 46b) zur Erfassung der Lage des beweglichen Objektes und mittels einer Nachführeinrichtung (6;54) berührungslos nachgeführt wird.

2. Gekapselte Positionsmeßeinrichtung nach Anspruch 1, dadurch gekennzeichnet, daß die Nachführeinrichtung (6, 54) als Servo-Nachführregeleinrichtung ausgebildet ist.

3. Gekapselte Positionsmeßeinrichtung nach Anspruch 1, dadurch gekennzeichnet, daß die Ableseeinrichtung (4, 42, 44) über wenigstens einen Antrieb (6a, 6c) verfügt, der von der Nachführeinrichtung (6, 54) angesteuert wird.

4. Gekapselte Positionsmeßeinrichtung nach Anspruch 1, dadurch gekennzeichnet, daß das Sensorsystem (4a, 4b, 4c, 4d; 44a, 44b; 46a, 46b) der Nachführeinrichtung (6, 54) die Daten zur Nachführung der Ableseeinrichtung (4, 42, 44) liefert.

5. Gekapselte Positionsmeßeinrichtung nach Anspruch 3, dadurch gekennzeichnet, daß der Antrieb in wenigstens zwei Komponenten (6a und 6c) aufgeteilt ist, wobei die eine Komponente (6a) ein Elektromotor und die zweite Komponente (6c) ein trägheitsarmer Piezo-Antrieb ist.

6. Gekapselte Positionsmeßeinrichtung nach Anspruch 3 und 5, dadurch gekennzeichnet, daß der Antrieb (6a, 6c) auf einer separaten Einheit (6) montiert ist, die mit der Ableseeinrichtung (4, 42) in Meßrichtung starr gekoppelt ist.

7. Gekapselte Positionsmeßeinrichtung nach Anspruch 4, dadurch gekennzeichnet, daß das Sensorsystem (4a...46b) aus wenigstens einer aktiven und einer passiven Komponente besteht und daß vorzugsweise die aktive Komponente (4a, 4c; 44a; 46a) innerhalb des hermetisch geschlossenen Gehäuses (2, 24, 26) angeordnet ist.

8. Gekapselte Positionsmeßeinrichtung nach Anspruch 4, dadurch gekennzeichnet, daß das Sensorsystem (4a...46b) nach Art eines Nullindikators aufgebaut ist.

9. Gekapselte Positionsmeßeinrichtung nach Anspruch 4, dadurch gekennzeichnet, daß das Sensorsystem (4a...46b) mit der Ableseeinrichtung (4, 42, 44) berührungslos zusammenwirkt.

10. Gekapselte Positionsmeßeinrichtung nach Anspruch 4, dadurch gekennzeichnet, daß für die Erfassung der Position des beweglichen Objektes mehrere Sensorkomponenten (4a, 4b und 4c, 4d) vorgesehen sind, durch deren Kombination die Empfindlichkeit des Sensorsystemes erhöht wird.

## Claims

1. A fully enclosed position-measuring device for measuring the relative position of two objects, having a casing for enclosing a measurement datum, said casing to be affixed to one of the objects, and a read-off device for the measurement datum, characterised in that the casing (2; 24; 26) is hermetically sealed and the read-off device (4; 42; 44) is caused to follow up the other movable object in a non-contacting manner by means of a sensor system (4a, 4b; 42a/42b, 42c, 42d; 44a, 44b; 46a, 46b) for detecting the position of the movable object, and by means of a tracking device (6; 54).

2. A fully-enclosed position-measuring device according to Claim 1, characterised in that the tracking device (6, 54) is designed as a servo tracking regulating device.

3. A fully enclosed position-measuring device according to Claim 1, characterised in that the read-off device (4, 42, 44) has at least one drive system (6a, 6c) which is triggered by the tracking device (6, 54).

4. A fully enclosed position-measuring device according to Claim 1, characterised in that the sensor system (4a, 4b, 4c, 4d; 44a, 44b; 46a, 46b) transmits to the tracking device (6, 54) the data for causing the read-off device (4, 42, 44) to follow up.

5. A fully enclosed position-measuring device according to Claim 3, characterised in that the drive system is divided into at least two components (6a and 6c), one component (6a) being an electric motor, and the second component (6b) being a low-inertia piezo drive.

6. A fully enclosed position-measuring device according to Claims 3 and 5, characterised in that the drive system (6a, 6c) is mounted on a separate unit (6) which is rigidly coupled in the direction of measurement with the read-off device (4, 42).

7. A fully enclosed position-measuring device according to Claim 4, characterised in that the sensor system (4a...46b) comprises at least one active and one passive component, and in that the active component (4a, 4c; 44a; 46a) is preferably disposed within a hermetically-sealed casing (2, 24, 26).

8. A fully enclosed position-measuring device according to Claim 4, characterised in that the sensor system (4a...46b) is constructed in the manner of a zero indicator.

9. A fully enclosed position-measuring device according to Claim 4, characterised in that the sensor system (4a...46b) operates in conjunction with the read-off device (4, 42, 44) in a non-contacting manner.

10. A fully enclosed position-measuring device according to Claim 4, characterised in that, in order to detect the position of the movable object, several sensor components (4a, 4b and 4c, 4d) are provided, by means of whose combination the sensitivity of the sensor system is increased.

## Revendications

1. Dispositif de mesure de position étanche pour la mesure de la position relative de deux objets composé d'un boîtier à fixer sur l'un des objets et destiné à recevoir une règle de mesure et d'un dispositif de lecture de la règle de mesure, caractérisé en ce que le boîtier (2; 24; 26) est fermé de manière hermétique et le dispositif de lecture (4; 42; 44) est déplacé sans contact à la suite de l'autre objet mobile au moyen d'un système de capteurs (4a, 4b; 42a, 42b; 42c, 42d; 44a, 44b; 46a, 46b) pour la détermination de la position de l'objet mobile ainsi qu'au moyen d'un dispositif suiveur (6, 54).

2. Dispositif de mesure de position étanche selon la revendication 1, caractérisé en ce que le dispositif suiveur (6, 54) est agencé sous forme de dispositif de réglage suiveur à servo-commande.

3. Dispositif de mesure de position étanche selon la revendication 1, caractérisé en ce que le dispositif de lecture (4, 42, 44) dispose d'au moins un dispositif d'entraînement (6a, 6c) qui est commandé par le dispositif suiveur (6, 54).

4. Dispositif de mesure de position étanche selon la revendication 1, caractérisé en ce que le système de capteurs (4a, 4b, 4c, 4d; 44a, 44b; 46a, 46b) fournit au dispositif suiveur (6, 54) les informations pour suivre le dispositif de lecture (4, 42, 44).

5. Dispositif de mesure de position étanche selon la revendication 3, caractérisé en ce que le dispositif d'entraînement est divisé en au moins deux composants (6a et 6c), l'un des composants (6a) étant un moteur électrique et le deuxième composant (6c) un entraînement piézo à faible inertie.

6. Dispositif de mesure de position étanche selon les revendications 3 et 5, caractérisé en ce que le dispositif d'entraînement (6a, 6c) est monté sur une unité (6) distincte qui est couplée rigidement au dispositif de lecture (4, 42) dans la direction de mesure.

7. Dispositif de mesure de position étanche selon la revendication 4, caractérisé en ce que le système de capteurs (4a ... 46b) est composé d'au moins un composant actif et un composant passif et en ce que, de préférence, le composant actif (4a, 4c; 44a; 46a) es t disposés à l'intérieur du boîtier (2, 24, 26) fermé hermétiquement.

8. Dispositif de mesure de position étanche selon la revendication 4, caractérisé en ce que le système de capteurs (4a ... 46b) est agencé en indicateur de zéro.

9. Dispositif de mesure de position étanche selon la revendication 4, caractérisé en ce que le système de capteurs (4a ... 46b) coopère sans contact avec le dispositif de lecture (4, 42, 44).

10. Dispositif de mesure de position étanche selon la revendication 4, caractérisé en ce qu'il est prévu, pour la détection de la position de l'objet mobile, plusieurs éléments de capteurs (4a, 4b et 4c, 4d) dont la combinaison permet d'augmenter la sensibilité du système de capteurs.

FIG. 1

ce que, de préférence, le composant actif (4a, 4c; 44a; 46a) es t disposés à l'intérieur du boîtier (2, 24, 26) fermé hermétiquement.

8. Dispositif de mesure de position étanche selon la revendication 4, caractérisé en ce que le système de capteurs (4a ... 46b) est agencé en indicateur de zéro.

9. Dispositif de mesure de position étanche selon la revendication 4, caractérisé en ce que le système de capteurs (4a ... 46b) coopère sans contact avec le dispositif de lecture (4, 42, 44).

10. Dispositif de mesure de position étanche selon la revendication 4, caractérisé en ce qu'il est prévu, pour la détection de la position de l'objet mobile, plusieurs éléments de capteurs (4a, 4b et 4c, 4d) dont la combinaison permet d'augmenter la sensibilité du système de capteurs.

FIG. 1